# EUROPEAN PATENT SPECIFICATION

(11) **EP 0 354 793 B1**
(45) Date of publication and mention of the grant of the patent: **23.10.1996**
(21) Application number: 89308141.4
(22) Date of filing: 10.08.1989
(51) Int. Cl.: G07F 7/10, G06K 19/073

(54) **IC card and method for rewriting its program**
Chipkarte und Verfahren zum Wiedereinschreiben ihres Programmes
Carte à circuit intégré et méthode pour réécrire son programme

(30) Priority: 12.08.1988 JP 201218/88; 12.08.1988 JP 201219/88
(43) Date of publication of application: 14.02.1990
(73) Proprietor: HITACHI MAXELL, LTD., Ibaraki-shi Osaka (JP)
(72) Inventor: Shinagawa, Toru, Toride-shi (JP)
(74) Representative: Senior, Alan Murray

(56) References cited:
- FR-A- 2 600 446
- US-A- 4 829 169

## Description

### BACKGROUND OF THE INVENTION

The present invention relates to an IC card and a method for rewriting its program, and more particularly to a down-loadable IC card which is capable of rewriting its program quickly and a method for rewriting its processing program.

'IC cards' are now being used in a wide variety of applications. The IC cards issued in accordance with several kinds of transactions contain their individual data contents to be processed by different processing procedures. Therefore, the processing programs for the IC cards are peculiar to the terminals or host computers (hereinafter represented by terminals) in which they are employed.

For this reason, there has been proposed 'down-load processing' IC cards in which from the terminals corresponding to several transactions including bank transaction, their corresponding processing programs are afterwards written into the IC cards.

These IC cards include a rewritable non-volatile memory at their information memory part in which a processing program is stored; and thus if the operation of an IC card is desired to be changed, its program can be rewritten.

However, such a system has the following problem. In performing the write or rewrite of a program for the IC card belonging to the above class, used are instructions dedicated to high speed transfer in which programs of about 1 to 8 K bytes are transferred each byte in place of block transfer in which blocks of about 10 to 80 bytes are transferred for each byte and provides a long overhead time. And also even if the program is to be partially rewritten, the IC card is adapted so that the program has to be wholly rewritten, which takes a long time for the rewrite of program.

The program may include an application program and some parameters necessary for execution thereof. The parameters are constants, identification codes of the card and a user. Moreover, since a large amount of data must be transferred at a high speed in order to rewrite the program, the transfer error detection system becomes also complicated.

JP-A-62-231,393 discloses an IC card containing a memory for storing data which is indexed, and is not concerned with the execution of program.

FR-2,600,446 also discloses an IC card for storing indexed data.

An aim of the present invention is to provide an IC card and a method for rewriting its program in which the rewrite can be done in a very short time only by transferring to the IC card a divided program including a part to be rewritten.

Another aim of the present invention is to provide an IC card and a method for rewriting its program in which after a program is recorded in a plurality of divided programs in a memory area, if the size of the divided programs which are objects to be newly rewritten is made larger than that before the rewriting, they can be rewritten in accordance with their corresponding memory areas.

Thus, according to the present invention there is provided a method for storing, rewriting and executing a program in an IC card having an input/output port for inputting a program to be down-loaded and outputting its processing result, a main storage area for storing data and programs, and a processor for sending the program input from the input/output port to said main storage area of the IC card, and a terminal for communicating commands to said IC card through said processor, the steps of the method comprising:
storing the program comprised of a plurality of program parts in a plurality of corresponding sub-areas of a first portion of said main storage area of the IC card,
storing a plurality of management information to identify each of the program parts stored in said sub-areas, each of said plurality of management information including a sub-area number for one of said program parts and a base address in a second portion of said main storage area of the IC card,
sending a sub-area number corresponding to said program part to be rewritten from the terminal to the IC card,
selecting a sub-area to be rewritten by referring to the management information based on said sub-area number,
sending the program part to be rewritten,
rewriting the contents of the selected sub-area with the sent program part, and
executing sequentially said plurality of program parts in an order based on said management information.

According to the present invention there is provided a system for storing, rewriting and executing a program in an IC card as set out in claim 6.

The circuits arranged in the IC card include rewritable non-volatile memory means for storing the processing program to be executed by an ALU and management information for managing the areas where the processing program is stored in sub-areas of divisional programs; and means for writing, referring to the management information in accordance with the information specifying one or plural of the sub-areas input to the ALU, input programs in the sub-area(s).

In order to manage a processing program stored in the rewritable non-volatile memory in the manner of being divided into plural programs constituting it, a region for storing attribute information, including the leading address and area length of each of the sub-areas where the program parts are stored, as management information indicative of the reality of the areas. It is possible to set attribute information optionally. The processing program with any size composed of the program parts can be stored. Moreover, the above sub-areas can be optionally selected afterwards. In rewriting the processing program, it is not rewritten by transferring a whole program to an IC card but is partially rewritten only as to the sub-area storing the contents to be changed in the rewritable non-volatile memory, referring to the management information including the top address and area length of that sub-area previously stored in the IC card (the management information may be rewritten before writing the program parts if necessary).

In this way, in rewriting the processing program, only the program(s) which are desired to be rewritten in the processing program may be transferred to the IC card from the external device such as an IC card reader and writer, and therefore on the side of the IC card the entire program is not required to be rewritten so that the processing of rewriting the program can be efficiently carried out.

### BRIEF DESCRIPTION OF THE DRAWINGS

Fig. 1 is a block diagram of the IC card according to one embodiment of the present invention;
Fig. 2a is a table showing the relation between the entire processing program of the IC card and its divided program/data parts;
Fig. 2b is a view showing the relation between areas for storing the divided program parts and their corresponding attribute information;
Figs. 3a to 3c are memory maps showing several relations between the processing program and the divided program/data parts;
Figs. 4a to 4c are views showing the relation between the attribute information about the program memory areas where a plurality of programs are stored, and their corresponding discrimination information; and
Fig. 5 is a view for explaining one example of the communication sequence between an IC card and a terminal device.

### DESCRIPTION OF THE PREFERRED EMBODIMENT

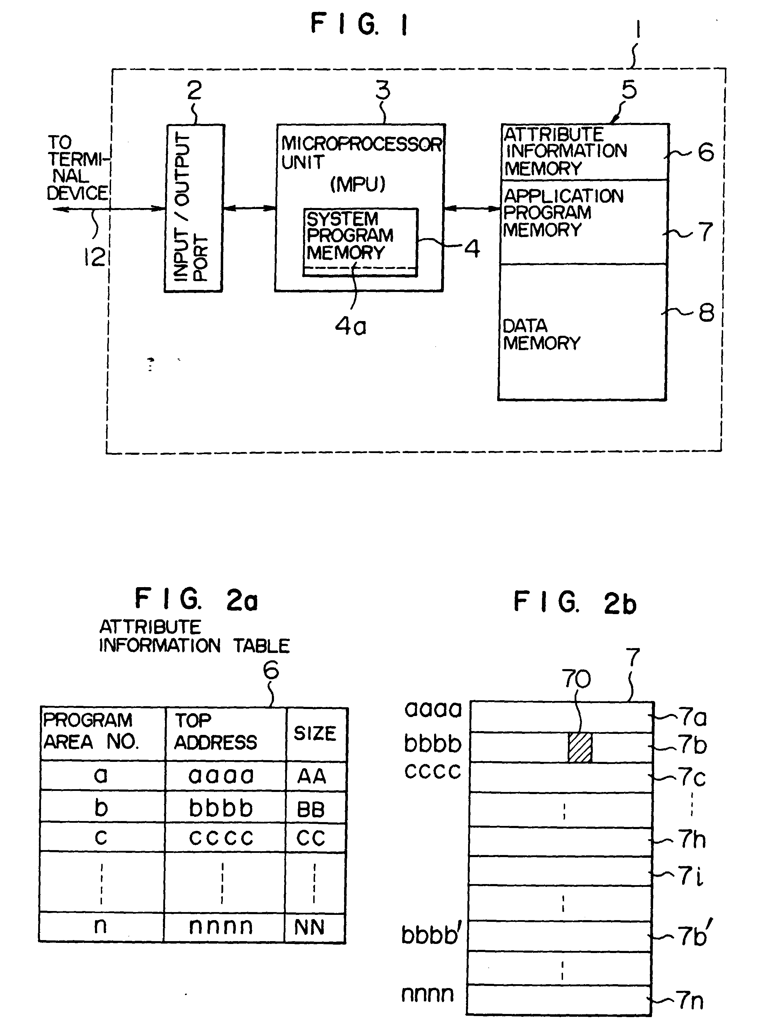

As seen from Fig. 1, an IC card 1 is composed of an I/O part 2, an ALU or microprocessor unit (MPU) 3 and an information memory part 5 which may be rewritable non-volatile memory such as EEPROM. The I/O part 2 includes electrical contacts (not shown) on the surface of the IC card for inputting/outputting programs and for power supply. In place of the electrical contacts, electromagnetic induction may be adopted for downloading the program in the IC card. The information memory part 5 is composed of an application program memory section 7, an attribute information section 6 for storing management information for the areas of the program parts into which the application program to be stored in the application program memory 7 is divided, and data memory section 8 for storing several kinds of data.

MPU 3 includes a system program memory 4 (e.g. mask ROM) in which a system program 4a for performing the hardware control of the IC card 1 is stored. By executing the system program 4a, MPU 3 performs the write/read of the program for the application program memory section 7 and the control of communication with terminal devices (e.g. IC card reader/writer incorporated therein). Moreover, MPU 3, by executing the system program 4a, performs the write of the attribute information transferred from an external device (the above terminal device) in the attribute information memory section 6 in accordance with an instruction transferred from the external device. As will be described later, the application program memory section 7 is managed in the manner of dividing it into a plurality of memory areas, corresponding to a plurality of program parts of the application program to be stored therein, in accordance with the attribute information stored in the attribute information memory section 6.

If the application program is to be down-loaded, it is executed for each of dividable program parts. Now it is assumed that the processing program is equally divided into program parts each with e.g. 32 bytes. However, the unit of division is not limited to 32 bytes but may be optionally selected.

First, the attribute information (Fig. 2a) about each of the areas storing each program part (32 bytes) received at the I/O part 2 is written in the attribute information memory section 6. The write of the attribute information is executed by activating the system program stored in the system program memory 4.

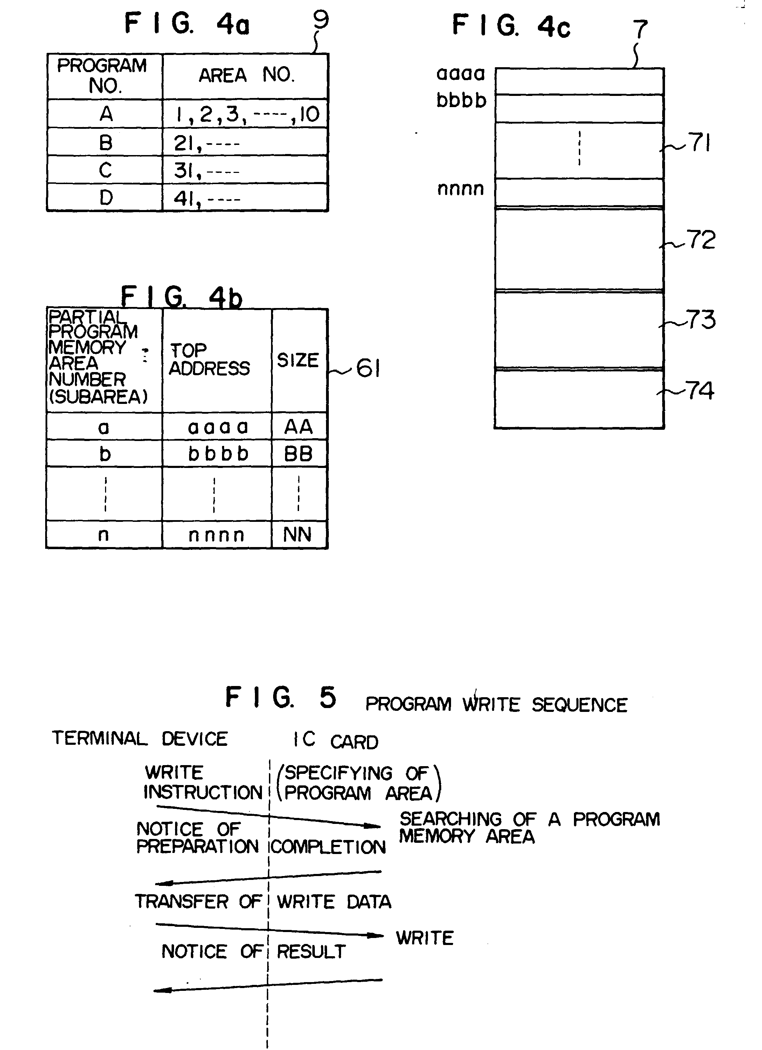

After the write of the attribute information, the write of the application program is performed in accordance with the sequence as shown in Fig. 5. First, a write instruction specifying the program part area to be subjected to the write using discrimination information provided in accordance with the divided program parts, i.e. the area numbers, is transferred to the IC card 1 from the terminal device (not shown). In response to the receipt of the write instruction, MPU 3 of the IC card 1 aquires, in accordance with the above discrimination information, the top address, size, etc. of the pertinent program part memory area in the application program memory section 7 from the attribute information stored in the attribute information memory section 6 and prepares the write thereof.

After the completion of this preparation of write, MPU 3 of the IC card 1 informs the terminal device of this fact through a data/control line 12 in accordance with the system program 4a.

Thus, data to be written (one of the divided program parts constituting a part of the processing program, i.e. 32 bytes) is transferred from terminal device. When received this write data, MPU 3 executes the write of the transferred program part (write data), in accordance with the system program 4a, in the program part memory area (32 bytes) specified by the top or leading address and the size in the application program memory section 7 of the information memory part 5 of the IC card 1. Incidentally, if the memory area is fixed to 32 bytes, the above acquisition of the size of the memory area may be omitted.

After the completion of write of one data (32 bytes), discrimination information about the subsequent program part (32 bytes) is transferred from the terminal device in the same way. In accordance with the response on the side of the IC card 1, the program part (32 bytes) corresponding to the discrimination information is transferred from the terminal device. Then, this program part is stored in the program part memory area specified in accordance with the attribute information decided by the precedently transferred discrimination information, In this way, the program parts of one processing program are sequentially stored by 32 bytes. As a result, the entire processing program will be stored as a collection of the program data parts in the application program memory section 7.

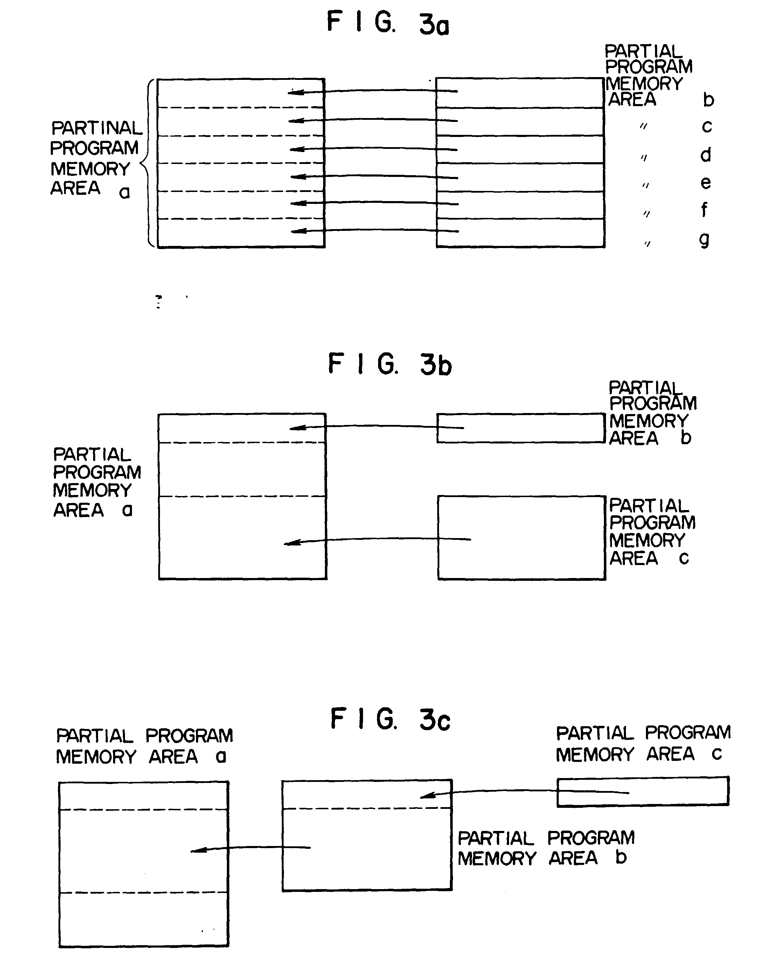

Fig. 2a shows the relation between the entire processing program thus stored (a in Fig. 3a) and its program parts (b to g in Fig. 3a), and Fig. 2b shows the relation between the memory areas for storing the program parts (Fig. 2b) and their attribute information (Fig. 2a). In this embodiment, as seen from Fig. 2b, the application program memory section 7 is divided into n (n: integer of 2 or more) program memory areas 7a to 7n. Stored in plural memory areas (e.g. 7a to 7h) of the respective divided memory areas 7a to 7n are the program parts through the above write processing. In this case, the program part memory areas 7i to 7n are vacant areas reserved for rewrite. The order of writing the program parts may be optional since the write is performed in accordance with the numbers of the sub-areas, i.e. items of discrimination information.

As seen from Fig. 2a, the attribute information is stored in a table form in the attribute information memory section 6. Program area numbers are stored at the heads of the respective rows as information for discriminating the program areas for storing the program parts and further spaces for storing the base address and size for each row are provided.

The program area numbers, a, b, c, ... n in Fig. 2a correspond to the program part memory areas 7a, 7b, 7c, ... 7n with the same subscripts in Fig. 2b. Also, in Fig. 2a, aaaa, AA; bbbb, BB; cccc, CC; ... nnnn, NN in the respective spaces corresponding to the program area numbers a, b, c, ... n represent the base address and size thereof, respectively. The reason why both base address and size are provided is that although this is not required in the case the application program is managed in the equally divided program parts of 32 bytes, it is intended to manage the program in the program parts of any integer times of 32 bytes.

The application program in the case where it is managed in the program divided parts is executed in the sequence of the above program area numbers, namely in the sequence of a, b, c, ... n this embodiment. Therefore, initially, as shown in Fig. 2b, the sequence of the program area numbers a, b, c, ... n accord with the sequence of arranging the program parts. And even if the sequence is changed by rewriting any program part, any problem does not occur since the previous program area numbers are retained.

Moreover, in the case where the processing program is not to be executed in the sequence of the numbers of program areas, information for specifying the sequence of connecting the program parts in the respective memory areas is previously stored in the information memory section 5, or the program area number to be subsequently executed is previously stored at the end of the program part to be stored in each program area, thereby executing the application program composed of program parts the memory areas of which are discontinu- ously arranged. The sequence of executing the program parts may be stored in the attribute information memory section 6.

Now it is assumed that a shaded portion 70 of the program part 7b is desired to be rewritten. In this case the rewrite of the program part 7b has only to be instructed from the terminal device, where the program parts relative to the program areas 7a and 7c to 7n are not required to be transferred. More specifically, if the rewrite portion is specified from the terminal device in terms of the discrimination information referring to the attribute information corresponding to the program memory area 7b, MPU 3, as in the case of write of the application program mentioned above, searches, acquires and accesses the attribute information relative to the program part 7b, referring to the discrimination information stored in the attribute memory section 6, in response to comparison between the description information and the attribute information, and writes the program part sent from the terminal device in the specified memory area.

Additionally, if the program part to be rewritten is smaller in size than the previous program part, the attribute information is not required to be changed since NOP is embedded in the remaining portion of the subarea. On the other hand, if the program data to be rewritten is in size larger than the previous program part, the overflowing portion is written in a vacant area 7b′. And in executing the application program, added is an instruction of jumping to the top address (bbbb′ in Fig. 2b) of the area 7b′ to execute the program part therein and jumping to the top address of the memory area subsequent to the area subjected to the rewrite. It is of course that the memory area of the program part to be stored in the vacant area is previously set by newly writing the attribute information thereof in the attribute information memory section 6. Otherwise, if the program part to be rewritten is larger in size than the previous program part, attribute information may be previously sent from the terminal device to register renewed base address and size for the same program area number in the attribute information memory section 6, thereby setting the area for storing in another vacant area of the information memory part 5. Then, the information in the memory area where the program part before the rewrite has been stored is cleared.

Several manners of setting program part memory areas will be explained with reference to Figs. 3a and 3b. In these cases, the program part memory areas can be optionally provided by setting (writing) their attribute information in the table of the attribute information section 6. Incidentally, Figs. 3a to 3c are all directed to the initial writing.

In an embodiment of Fig. 3a, the corresponding items of attribute information are set so that the entire application program can be stored in the way of dividing it into plural program parts each having a previously set information length. In initially writing the application program, the entire application program is first written in the program part memory area a. In this case, the program memory area is set to have a fixed length, regardless of the contents of the application program. In this way, the entire application program is previously stored in the program part memory area a which is a memory area of the entire application program. Thereafter, attribute information is written so that the program part a can be managed doubly as program parts b to g by writing the corresponding program parts as indicated by arrows for the partial change of the program.

In the case where the application program can be divided by sub-routines as function units, the program is stored by the sub-routine in the program part memory areas. In this case, the size of the program part memory area may be set at the size necessary to store the maximum one of the sub-routines.

In an embodiment of Fig. 3b, attribute information is previously written so that the program memory area a can be set doubly as only the program part areas b and c which are areas (e.g. area for table information) the rewrite of which is expected. The application program commonly has the constants employed internally or externally, the table for deciding the operation, etc. These are indicated internally in the program and hence the specification of the program can be changed to a certain degree by rewriting them. If the table information and the constants have only to be changed in rewriting the program, the program part memory areas may be rewritten.

Fig. 3c is directed to the case of setting an area for e.g. table information, like Fig. 3b. In this case, the entire table information area is set as a program part memory area b. Information relative to specific controls of the table information is stored collectively in a program part memory area c. In this way, the sub-memory area can be further doubly set so that part of the table information can be further rewritten.

In all of the above cases, if the program part to be rewritten in the program memory area a is comparatively large, a program instructing the jump to another program part memory area, which is a rewrite destination, is written. Thus, the execution sequence is shifted to the other program part stored in a vacant memory area of the application program memory section 7, thereby executing the entire application program.

Moreover, a single application program need not be stored in the application program memory section 7 but plural different may be stored therein. Figs. 4a to 4c show one such an example. In this example, four application programs A, B, C and D (Fig. 4a) are stored in application program memory areas 71, 72, 73 and 74 of the application program memory section 7 (Fig. 4c). In this example, a program discrimination information section 9 is provided in the information memory part in order to discriminate the program memory areas for storing the program parts included in each application program.

If, prior to executing the write, discrimination information for discriminating the application program and program part memory areas is inserted in a write instruction, it is possible to rewrite the program parts in each application program, in the same procedure and sequence as mentioned above, referring to the program discrimination information section 9 and attribute information memory section 61 (Fig. 4b). Additionally, specifying the application program in this example may be made by preparing a dedicated instruction without inserting the discrimination information in the write instruction. Moreover, if there are plural application programs, attribute information about the program may be provided for each program.

Fig. 5 shows the procedure for rewriting program parts. A terminal device specifies, using a program area number, the program part memory area corresponding to the program part to be written and issues a write instruction thereof. An IC card, after having received the write instruction, searches the specified program part memory area from the attribute information. Then, it acquires the base address and size of the pertinent program memory area for the preparation of write. After the completion of the preparation, the IC card informs the fact of the terminal device. In response to this, the terminal device prepares the transfer of the program to be written and transfers it to the IC card. The IC card performs the write of the program part after the receipt thereof or concurrently with the receipt. After the completion of the write, the IC card informs the terminal device of this fact, thereby completing the write. As understood from the above description, the terminal device has only to specify the program number corresponding to the pertinent program part whereby the IC card internally tests the finding of the area to be subjected to the write and the possibility of the write. The write is performed only if the IC card judges that the write can be made.

In the arrangement of the IC card shown in Fig. 1, the system program memory 4 may be provided in the information memory part 5. Moreover, the attribute information about the program part memory areas may include the end address of each program memory area in place of the base address to specify the area by adding 1 to the end address of the previous area, or subtracting by 1 from the end address of the specified area. It may also include the end address and others in addition to the base address. Further, the attribute information should not be limited to such items but may be and management indicative of the reality of the program parts in the information memory part 5.

The information memory part 5 may be composed of either a single memory element or plural elements as long as the application program memory section 7 is rewritable. Moreover, although the application program was made partially rewritable in the above embodiment, it may be any program as long as it can be executed by MPU 3. Additionally, address updating in the card reader writer for producing the program part for rewrite is ceased at the address corresponding to the end address for the program part memory area for rewrite.

## Claims

1. A method for storing, rewriting and executing a program in an IC card having an input/output port (2) for inputting a program to be down-loaded and outputting its processing result, a main storage area (5) for storing data and programs, and a processor (3) for sending the program input from the input/output port to said main storage area of the IC card, and a terminal for communicating commands to said IC card through said processor, the steps of the method comprising:
storing the program comprised of a plurality of program parts in a plurality of corresponding sub-areas of a first portion (7) of said main storage area of the IC card,
storing a plurality of management information to identify each of the program parts stored in said sub-areas, each of said plurality of management information including a sub-area number for one of said program parts and a base address in a second portion (6) of said main storage area (5) of the IC card,
sending a sub-area number corresponding to a program part to be rewritten from the terminal to the IC card,
selecting a sub-area to be rewritten by referring to the management information based on said sub-area number,
sending the program part to be rewritten,
rewriting the contents of the selected sub-area with the sent program part, and
executing sequentially said plurality of program parts in an order based on said management information.

2. A method according to claim 1, further comprising the steps of, if a selected program part to be rewritten exceeds the capacity of the sub-area previously occupied by an original program part, rewriting a base address of the management information corresponding to said original program part with an address of another vacant sub-area and automatically storing said selected program part into said other vacant sub-area of said plurality of sub-areas in said main storage of the IC card.

3. A method according to claim 1 or 2, wherein each said management information also includes the size of the sub-area in correspondence to said sub-area number and said base address included in said management information.

4. A method according to claim 1, 2 or 3, further comprising the step of:
when the program part for rewrite exceeds the capacity of the sub-area where an original program part has been stored, providing an instruction of jumping to the address of a vacant sub-area in the program part and thereafter jumping to the vacant sub-area.

5. A method according to claim 1, 2, 3 or 4 wherein the memory capacity of the sub-areas is fixed at 32 bytes.

6. A system for storing, rewriting and executing a program in an IC card (1) having an input/output port (2) for inputting a program to be down-loaded and outputting its processing result, a main storage area (7) for storing data and programs, and a processor (3) for sending the program input from the input/output port to said main storage area of the IC card, and a terminal for communicating commands to said IC card through said processor, the system comprising:
means (3) for storing the program comprised of a plurality of program parts in a plurality of corresponding sub-areas of a first portion (7) of said main storage area of the IC card,
means (3) for storing a plurality of management information to identify each of the program parts stored in said plurality of sub-areas, each of said plurality of management information including a sub-area number for one of said sub-areas and a base address in a second portion (6) of said main storage area of the IC card,
means (3) for sending a sub-area number corresponding to a program part to be rewritten from the terminal to the IC card,
means for selecting a sub-area to be rewritten by referring to the management information based on said sub-area number,
means (3) for sending the program part to be rewritten,
means for rewriting contents of the selected sub-area with the sent program part, and
means for executing sequentially said plurality of program parts in an order based on said management information.

## Patentansprüche

1. Verfahren zum Speichern, Einschreiben und Ausführen eines Programms in einer IC-Karte mit einem Eingangs/Ausgangsanschluß (2) zur Eingabe eines zu ladenden Programms und zur Ausgabe seines Verarbeitungsergebnisses, einem Hauptspeicherbereich (5) zum Speichern von Daten und Programmen und einem Prozessor (3) zum Senden der Programmeingabe von dem Eingangs-/Ausgangsanschluß zum Hauptspeicherbereich der IC-Karte und einem Anschluß zum Übermitteln von Anweisungen über den Prozessor an die IC-Karte, wobei das Verfahren die folgenden Schritte umfaßt:
- Speichern des aus mehreren Programmteilen bestehenden Programms in mehreren entsprechenden Unterbereichen eines ersten Abschnitts (7) des Hauptspeicherbereichs der IC-Karte,
- Speichern mehrerer Verwaltungsinformationen zur Identifikation jedes der in den Unterbereichen gespeicherten Programmteile, wobei jede der Verwaltungsinformationen die Nummer eines Unterbereichs für eines der Programmteile und eine Basisadresse in einem zweiten Abschnitt (6) des Hauptspeicherereichs (5) der IC-Karte enthält,
- Senden der Nummer des einem einzuschreibenden Programmteil entsprechenden Unterbereichs vom Anschluß zur IC-Karte,
- Auswählen eines einzuschreibenden Unterbereichs durch Bezugnahme auf die Verwaltungsinformationen auf der Grundlage der Nummer des Unterbereichs,
- Senden des einzuschreibenden Programmteils,
- Einschreiben des gesendeten Programmteils auf die Inhalte des gewählten Unterbereichs und
- sequentielles Ausführen der mehreren Programmteile in einer auf den Verwaltungsinformationen basierenden Reihenfolge.

2. Verfahren nach Anspruch 1, das ferner die folgenden Schritte umfaßt, wenn ein ausgewählter einzuschreibender Programmteil die Kapazität des vorher durch einen ursprünglichen Programmteil belegten Unterbereichs übersteigt:
- Einschreiben einer Adresse eines anderen leeren Unterbereichs auf eine Basisadresse der dem ursprünglichen Programmteil entsprechenden Verwaltungsinformation und
- automatisches Speichern des ausgewählten Programmteils in den anderen leeren Unterbereich der mehreren Unterbereiche im Hauptspeicherbereich der IC-Karte.

3. Verfahren nach Anspruch 1 oder 2, bei dem jede der Verwaltungsinformationen auch die Größe des Unterbereichs einschließt, der der Unterbereichsnummer und der Basisadresse entspricht, die in den Verwaltungsinformationen enthalten sind.

4. Verfahren nach Anspruch 1, 2 oder 3, das ferner den folgenden Schritt umfaßt, wenn der einzuschreibende Programmteil die Kapazität des Unterbereichs übersteigt, in dem ein ursprüngliches Programmteil gespeichert war:
- Erzeugen einer Anweisung zum Springen zu der Adresse eines leeren Unterbereichs in dem Programmteil und anschließendes Springen zu dem leeren Unterbereich.

5. Verfahren nach Anspruch 1, 2, 3 oder 4, bei dem die Speicherkapazität der Unterbereiche auf 32 Byte festgelegt ist.

6. System zum Speichern, Einschreiben und Ausführen eines Programms in einer IC-Karte (1) mit einem Eingangs/Ausgangsanschluß (2) zur Eingabe eines zu ladenden Programms und zur Ausgabe seines Verarbeitungsergebnisses, einem Hauptspeicherbereich (7) zum Speichern von Daten und Programmen und einem Prozessor (3) zum Senden des Programmeingangs von dem Eingangs-/Ausgangsanschluß an den Hauptspeicherbereich der IC-Karte sowie einem Anschluß zum Übermitteln von Anweisungen über den Prozessor an die IC-Karte, wobei das System aufweist:
- eine Einrichtung (3) zum Speichern des aus mehreren Programmteilen bestehenden Programms in mehreren entsprechenden Unterbereichen eines ersten Abschnitts (7) des Hauptspeicherbereichs der IC-Karte,
- eine Einrichtung (3) zum Speichern mehrerer Verwaltungsinformationen zur Identifikation jedes der in den mehreren Unterbereichen gespeicherten Programmteile, wobei jede der mehreren Verwaltungsinformationen eine Unterbereichsnummer für einen der Unterbereiche und eine Basisadresse in einem zweiten Abschnitt (6) des Hauptspeicherbereichs der IC-Karte enthält,
- eine Einrichtung (3) zum Senden der einem einzuschreibenden Programmteil entsprechenden Unterbereichsnummer vom Anschluß zur IC-Karte,
- eine Einrichtung zum Auswählen eines einzuschreibenden Unterbereichs anhand der Unterbereichsnummer unter Bezugnahme auf die Verwaltungsinformationen,
- eine Einrichtung (3) zum Senden des einzuschreibenden Programmteils,
- eine Einrichtung zum Einschreiben des gesendeten Programmteils auf die Inhalte des ausgewählten Unterbereichs und
- eine Einrichtung zum sequentiellen Ausführen der mehreren Programmteile in einer auf den Verwaltungsinformationen basierenden Reihenfolge.

## Revendications

1. Procédé pour mémoriser, ré-écrire et exécuter un programme dans une carte de circuit intégré comprenant une borne (2) d'entrée/sortie servant à entrer un programme devant être téléchargé et à délivrer son résultat de traitement, une région (5) de mémorisation principale servant à stocker des données et des programmes, un processeur (3) servant à envoyer le programme entré par la borne d'entrée/sortie à ladite région de mémorisation principale de la carte de circuit intégré, et un terminal servant à communiquer des instructions à ladite carte de circuit intégré par l'intermédiaire dudit processeur, les étapes dudit procédé comprenant :
- la mémorisation du programme composé d'une pluralité de parties de programme dans une pluralité de sous-régions correspondantes d'une première partie (7) de ladite région de mémorisation principale de la carte de circuit intégré,
- la mémorisation d'une pluralité d'informations de gestion servant à identifier chacune des parties de programme mémorisées dans lesdites sous-régions, chacune desdites informations de gestion comprenant un numéro de sous-région pour l'une desdites parties de programme et une adresse de base dans une seconde partie (6) de ladite région (5) de mémorisation principale de la carte de circuit intégré,
- l'envoi, du terminal à la carte de circuit intégré, d'un numéro de sous-région qui correspond à une partie de programme devant être ré-écrite,
- le choix d'une sous-région devant être ré-écrite par référence à l'information de gestion basée sur ledit numéro de sous-région,
- l'envoi de la partie de programme devant être ré-écrite,
- la ré-écriture par la partie de programme envoyée du contenu de la sous-région choisie, et
- l'exécution séquentielle de ladite pluralité de parties de programme selon un ordre basé sur ladite information de gestion.

2. Procédé selon la revendication 1, comprenant en outre les étapes consistant, si une partie de programme choisie pour être ré-écrite dépasse la capacité de la sous-région précédemment occupée par une partie de programme de départ, à ré-écrire une adresse de base de l'information de gestion qui correspond à ladite partie de programme de départ avec l'adresse d'une autre sous-région vacante et à mémoriser automatiquement ladite partie de programme choisie dans ladite autre sous-région vacante de ladite pluralité de sous-régions de ladite région de mémorisation principale de la carte de circuit intégré.

3. Procédé selon la revendication 1 ou 2, dans lequel chaque information de gestion contient également la taille de la sous-région en correspondance avec ledit numéro de sous-région et ladite adresse de base contenus dans ladite information de gestion.

4. Procédé selon la revendication 1, 2 ou 3, comprenant en outre l'étape consistant, lorsque la partie de programme à ré-écrire dépasse la capacité de la sous-région dans laquelle a été mémorisée la partie de programme de départ, à envoyer une instruction de saut à l'adresse d'une sous-région vacante dans la partie de programme, puis à sauter à la sous-région vacante.

5. Procédé selon la revendication 1,2, 3 ou 4, dans lequel la capacité de mémorisation des sous-régions est fixée à 32 octets.

6. Dispositif pour mémoriser, ré-écrire et exécuter un programme dans une carte de circuit intégré (1) comprenant une borne (2) d'entrée/sortie servant à entrer un programme devant être téléchargé et à délivrer son résultat de traitement, une région (5) de mémorisation principale servant à stocker des données et des programmes, un processeur (3) servant à envoyer le programme entré par la borne d'entrée/sortie à ladite région de mémorisation principale de la carte de circuit intégré, et un terminal servant à communiquer des instructions à ladite carte de circuit intégré par l'intermédiaire dudit processeur, ledit dispositif comprenant :
- des moyens (3) pour mémoriser le programme composé d'une pluralité de parties de programme dans une pluralité de sous-régions correspondantes d'une première partie (7) de ladite région de mémorisation principale de la carte de circuit intégré,
- des moyens (3) pour mémoriser une pluralité d'informations de gestion servant à identifier chacune des parties de programme mémorisées dans lesdites sous-régions, chacune desdites informations de gestion comprenant un numéro de sous-région pour l'une desdites parties de programme et une adresse de base dans une seconde partie (6) de ladite région de mémorisation principale de la carte de circuit intégré,
- des moyens (3) pour envoyer, du terminal à la carte de circuit intégré, un numéro de sous-région qui correspond à une partie de programme devant être ré-écrite,
- des moyens pour choisir une sous-région devant être ré-écrite par référence à l'information de gestion basée sur ledit numéro de sous-région,
- des moyens (3) pour envoyer la partie de programme à ré-écrire,
- des moyens pour ré-écrire avec la partie de programme envoyée le contenu de la sous-région choisie, et
- des moyens pour exécuter séquentiellement ladite pluralité de parties de programme selon un ordre basé sur ladite information de gestion.
